Europäisches Patentamt

European Patent Office

Office européen des brevets

(19)

(11)    **EP 1 607 215 A1**

(12)    **EUROPEAN PATENT APPLICATION**
published in accordance with Art. 158(3) EPC

(43) Date of publication:
   **21.12.2005 Bulletin 2005/51**

(51) Int Cl.7: **B32B 27/18**

(21) Application number: **04723736.7**

(86) International application number:
   **PCT/JP2004/004246**

(22) Date of filing: **26.03.2004**

(87) International publication number:
   **WO 2004/085151 (07.10.2004 Gazette 2004/41)**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL LT LV MK**

(30) Priority: **26.03.2003 JP 2003085564
   29.09.2003 JP 2003337590
   29.09.2003 JP 2003337587
   30.09.2003 JP 2003342351
   26.01.2004 JP 2004017512**

(71) Applicant: **Toto Ltd.
   Kitakyushu, Fukuoka 802-8601 (JP)**

(72) Inventors:
   • **KAMESHIMA, Junji, c/o Toto Ltd.
     Kitakyushu-shi, Fukuoka 802-8601 (JP)**
   • **NIIMI, Yasushi, c/o Toto Ltd.
     Kitakyushu-shi, Fukuoka 802-8601 (JP)**
   • **NAKANISHI, Makoto, c/o Toto Ltd.
     itakyushu-shi, Fukuoka 802-8601 (JP)**
   • **OHASHI, Eiko, c/o Toto Ltd.
     Kitakyushu-shi, Fukuoka 802-8601 (JP)**

(74) Representative: **Grünecker, Kinkeldey,
   Stockmair & Schwanhäusser Anwaltssozietät
   Maximilianstrasse 58
   80538 München (DE)**

(54)    **FUNCTIONAL MEMBER AND METHOD FOR PRODUCTION THEREOF AND FLUID TO BE APPLIED**

(57)    There is provided a functional member, which is excellent in terms of a humidity controlling function, a removal function of toxic chemicals and an unpleasant living odor, antifouling properties, stain concealing properties, and flexibility. A functional member is provided with a first layer which is formed on a flexible base material and comprises a dry matter of a mixture comprising an inorganic porous material and an organic emulsion, and a second layer comprising an inorganic filler which is fixed over an approximately entire surface of the first layer by an organic binder, wherein the organic matter in the organic emulsion has a glass-transition temperature of -5°C to -50°C; and the organic binder in the second layer is contained in an amount of 30-300 parts by volume to 100 parts by volume of the inorganic filler.

FIG. 1

EP 1 607 215 A1

**Description**

BACKGROUND OF THE INVENTION

Field of the Invention

The present invention relates to a functional member, which is excellent in terms of a humidity controlling function to autonomously control a relative humidity in a space, a removal function of toxic chemicals and an unpleasant living odor, antifouling properties, stain concealing properties, flexibility and the like, and a method and an coating liquid for producing the functional member.

Background Art

There has been known a humidity control building material with moisture absorbing/releasing performance. The humidity control building material is a building material to autonomously control a relative humidity in a space, which can absorb moisture in high humidity and release moisture in low humidity. Since, in living environments of recent years, moisture tends to accumulate in a room by virtue of improved heat insulation and airtight properties, a necessity of a humidity control building material is being heightened.

On the other hand, in recent years there is a problem that an indoor environmental pollution by toxic chemicals causes health disturbance such as sick house syndrome. Also, a demand for deodorizing an unpleasant living odor such as a toilet odor, a garbage odor, or a pet odor is still strong. And thus, it is still desirable that the humidity control building material has not only moisture absorbing/releasing performance but also a capability of adsorbing and removing toxic chemicals or an unpleasant odor in indoor air. Moreover, it is obvious that a surface of such a humidity control material is desirably stain-resistant.

Japanese Patent Laid-Open Publication No. 2000-117916 discloses a decorative material comprising a moisture absorbing/releasing resin layer and a permeable film of polyethylene or the like laminated on a surface of the moisture absorbing/releasing resin layer, thereby to impart contamination resistance thereto. Further, Japanese Patent Laid-Open Publication No. 2001-1479 discloses a decorative material comprising a moisture absorbing/releasing resin layer and a surface protective layer comprising a moisture permeable urethane resin formed on a surface of the moisture absorbing/releasing resin layer, thereby to impart contamination resistance thereto.

Japanese Patent Laid-Open Publication No. 01-113236 discloses a ceramic plate comprising a humidity controlling layer and a decorative layer with communicating air holes formed on the humidity controlling layer, thus improving design performance. Furthermore, Japanese Patent Laid-Open Publication No. 2000-43221 discloses a decorative material comprising a moisture absorbing/releasing resin layer and a decorated permeable sheet laminated on the moisture absorbing/releasing resin layer, thus improving design performance.

SUMMARY OF THE INVENTION

The inventors of the present invention have now found that forming, on a flexible base material, a first layer comprising a dry matter of a mixture comprising an inorganic porous material and a particular organic emulsion, and further forming a second layer comprising an inorganic filler and an organic binder at a certain ratio over an approximately entire surface of the first layer can provide a functional member which is excellent in a humidity controlling function, a removal function of toxic chemicals and an unpleasant living odor, antifouling properties, stain concealing properties, and flexibility.

Therefore, an object of the present invention is to provide a functional member excellent in a humidity controlling function, a removal function of toxic chemicals and an unpleasant living odor, antifouling properties, stain concealing properties and flexibility, and a method and an coating liquid for producing the functional member.

A functional member according to the present invention comprises:

a flexible base material,
a first layer which is formed on the base material and comprises a dry matter of a mixture comprising an inorganic porous material and an organic emulsion, and
a second layer comprising an inorganic filler which is fixed over an approximately entire surface of the first layer by an organic binder,

wherein the organic emulsion has a glass-transition temperature of -5°C to -50°C, and
wherein the organic binder in the second layer is contained in an amount of 30-300 parts by volume to 100 parts by volume of the inorganic filler.

Further, a method of producing a functional member according to the present invention comprises the steps of:

> providing a flexible base material,
> applying an coating liquid comprising an inorganic porous material and an organic emulsion in which a glass-transition temperature of an organic matter is -5°C to -50°C on the base material,
> drying the coating liquid to form a first layer, and
> applying a mixture of an inorganic filler and an organic binder over an approximately entire surface of the first layer to form a second layer, wherein
> the organic binder in the second layer is contained in an amount of 30-300 parts by volume to 100 parts by volume of the inorganic filler.

Furthermore, a coating liquid to form a first layer of a functional member according to the present invention comprises an inorganic porous material and an organic emulsion, wherein the organic matter of the organic emulsion has a glass-transition temperature of -5°C to -50°C.

DETAILED DESCRIPTION OF THE INVENTION

Functional Member

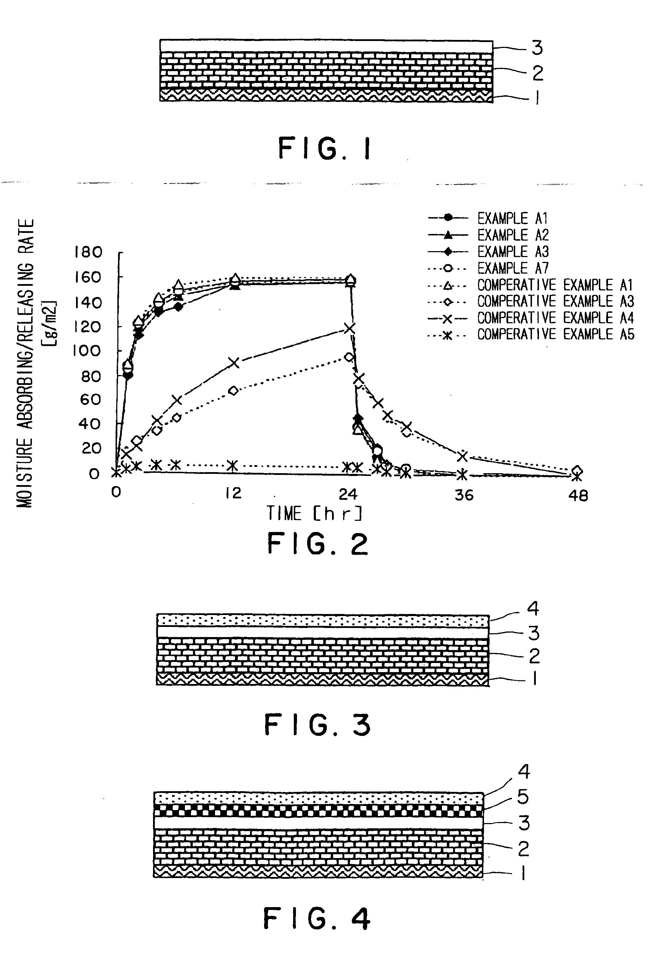

Fig. 1 shows an example of a functional member according to the present invention. A functional member according to the present invention comprises a base material 1, a first layer 2 and a second layer 3. On the base material 1 having flexibility, the first layer 2 is formed comprising a dry matter of a mixture comprising an inorganic porous material and an organic emulsion. The organic matter of the organic emulsion used in the first layer 2 has a glass-transition temperature of -5°C to -50°C. As a result, the first layer 2 exhibits not only moisture absorbing/releasing performance of water vapor but also absorption/removal performance of an indoor toxic chemical gas and an unpleasant living odor, as well as further has adequate flexibility.

Over an approximately entire surface of the first layer 2, the second layer 3 is formed. The second layer 3 comprises an inorganic filler and an organic binder fixing the inorganic filler. The organic binder is contained in the second layer 3 in an amount of 30-300 parts by volume relative to 100 parts by volume of the inorganic filler. According to the second layer 3, while the moisture absorbing/releasing performance to water vapor and the adsorption/removal performance to a stain by the first layer 2 are adequately secured, antifouling properties and stain concealing properties to a stain such as cigarette tar can be achieved. That is, the second layer 3 prevents a stain from being transmitted to some extent without blocking water vapor transmission, thus exhibiting antifouling properties. However, so as to achieve the above functions of the first layer 2 to the full, the second layer 3 does not completely prevent a stain from being transmitted but rather allows it to be transmitted therethrough to some extent. And, even when a stain such as cigarette tar is transmitted through the second layer 3 to be adsorbed in the first layer 2, a stain thereof is concealed by the inorganic filler which is contained in the second layer 3 by a predetermined amount, thereby preventing the stain from standing out. In other words, stain concealing properties can be obtained. As described above, according to the functional material of the present invention, the moisture absorbing/releasing performance and the contaminant removal performance can be compatible with the antifouling properties and stain concealing properties at a lower price. Furthermore, while the functional member of the present invention is a multilayer structure with such multi-functions, the functional member has flexibility. For this reason, the functional member of the present invention can be used for a wide range of applications including a building interior material, a vehicle interior material and the like.

Base Material

The base material used in the present invention is a base material having flexibility, preferably, the base material having properties of not being broken even when folded at an angle of 180°. Preferred examples of the base material include a paper, a synthetic resin sheet, a woven fabric, a non-woven fabric, a glass fiber sheet, a metal fiber, a flame-retardant backing paper, a base material paper for wall papers, a composite or a laminated material thereof, or other base materials which can be generally used for wall papers of vinyl cloth or the like.

When the functional member of the present invention is used as a building wall paper, a base material paper for wall papers is preferably used in terms of cost and productivity. More preferably, a base material paper having a three-layer structure comprising a backing paper, a film, and a non-woven fabric is used. On the non-woven fabric of the base material paper, a first layer is formed, and thus, adhesion of the first layer is improved by a so-called anchoring effect. Further, the film is disposed between the non-woven fabric and the backing paper. Therefore, when an coating liquid is applied to the base material, a wrinkle can be prevented from being generated on the base material paper. As the backing paper, so as to exhibit normal workability as a wall paper, a water-absorbing paper is preferable. It is preferable that the film is formed of a synthetic resin such as polyethylene, and is a non-permeable laminate film which acts as a water resistant layer. Disposing a layer of the non-permeable laminate film between the backing paper and the non-woven fabric prevents moisture from being moved from the paper to the first layer in construction, which therefore, can achieve workability comparable to that of normal vinyl cloth. Such a base material paper is mostly a combustible material made mainly of organic matters, and therefore, it is preferable that in terms of fire resistance, the base material paper weight is equal to or less than 150g/m$^2$.

First Layer

A first layer in the present invention comprises a dry matter of a mixture comprising an inorganic porous material and an organic emulsion. Since the first layer is porous due to the inorganic porous material and has a larger surface area, the first layer has excellent moisture absorbing/releasing performance to water vapor and excellent adsorption/removal performance to toxic chemicals or an unpleasant living odor.

The inorganic porous material in the present invention may be any one with a fine pore which can absorb/release moisture by adsorbing/desorbing water vapor. Preferred examples of the inorganic porous material include alumina-silica xerogel porous material, silica gel, activated alumina, mesoporous zeolite, mesoporous silica, porous glass, apatite, diatomaceous earth, sepiolite, allophane, imogolite, activated clay or the like.

According to a preferred embodiment of the present invention, it is preferable that a volume of a fine pore of which a diameter is 4-14nm measured by nitrogen gas adsorption of the inorganic porous material is equal to or more than 0.1 ml/g and that a total volume of all the fine pores of which each diameter is 1-200nm measured by nitrogen gas adsorption of the inorganic porous material is equal to or less than 1.5 ml/g. Owing to the above, excellent antifouling properties to a tar stain and the moisture absorbing/releasing performance can be obtained. In particular, humidity thereof can be efficiently adjusted autonomously within a range of a relative humidity between 40% and 70%, which is regarded to be the most comfortable.

A fine pore diameter and a fine pore volume of the inorganic porous material can be measured by the Barrett Joyner Halenda method with the use of a desorption isotherm obtained from a result of measurement of an adsorption/a desorption isotherm by nitrogen gas adsorption. A specific surface area/fine pore distribution analyzer used in the method is commercially available, and with the use of such a commercially available analyzer, the fine pore diameter and the fine pore volume of the inorganic porous material can be measured.

According to a preferred embodiment of the present invention, a volume average particle size of the inorganic porous material is preferably 20-60 μm. The particle size can be measured with a laser diffraction/scattering particle size analyzer. Hereby, a crack is not generated, there are very few uneven portions on the surface, and the improved appearance can be obtained.

The inorganic porous material in the present invention can be obtained as a commercially available material but also can be produced as follows.

An example of methods of producing an alumina-silica xerogel porous material will be described in the following. First of all, aluminum nitrate nonahydrate and tetraethyl orthosilicate are dissolved in ethanol at a predetermined ratio of $SiO_2$ to $Al_2O_3$. At the time, when needed, a predetermined amount of water is added to adjust a solution. The solution is stirred for 3 hours, and thereafter, 25% ammonia water is added therein, and the solution is coprecipitated to gelate. A gelling substance thus obtained is rapidly dried and thereafter fired at 300°C for 4 hours to obtain an alumina-silica xerogel porous material.

As an example of methods of manufacturing activated alumina, a method of selectively dissolving kaolin mineral is listed. In this method, the kaolin mineral is calcined at 900°C to 1200°C to cause a phase separation of amorphous silica and a spinel layer. It is preferable that a calcination temperature is, though depending on impurities of the kaolin mineral or the like, 950°C to 1050°C in general and further, the kaolin mineral is heated for approximately 1 to 24 hours. Phase separation substances obtained by heat treatment as described above are treated with alkali or hydrofluoric acid, and thereby, amorphous silica is selectively dissolved and the dissolved portion is formed as a fine pore.

In this case, as alkali treatment of the phase separation substances, KOH aqueous solution of approximately 1-5 mol/l is preferably used. Moreover, by maintaining a heating condition of approximately 50°C to 150°C for approximately 1-100 hours in the alkali treatment, amorphous silica is completely dissolved and a fine pore having a sufficient volume can be formed.

As another example of methods of manufacturing activated alumina, a pH swing synthetic method is listed. In the method, acid salt of aluminum and an aqueous solution of basic salt are mixed to deposit pseudoboehmite gel. Specifically, the mixing is preferably performed by alternately adding acid salt of aluminum and basic salt to adjust the pH to be equal to 2 and 10. A preferred example of the acid salt is aluminum nitrate, and a preferred example of the basic salt is sodium aluminate. The pseudoboehmite gel thus produced has particles grown by repeating pH swings, and by controlling the number of each of the swings and the swing pH, a deposited particle size of the pseudoboehmite gel can be controlled. The pseudoboehmite gel of which a particle size is controlled, obtained in this way, is heated/fired, whereby the pseudoboehmite is γ-aluminized to obtain activated alumina with fine pores formed thereon from the particle pore space. That is, by controlling a deposited particle size of the pseudoboehmite gel, a fine pore size of the activated alumina after heating/firing can be controlled.

As organic emulsion in the present invention, there is used organic emulsion in which an organic matter such as a resin having a glass-transition temperature between -5°C and -50°C is dispersed into a dispersion medium such as water or alcohol. This allows an improvement of flexibility of the functional material. A preferable glass-transition temperature in the organic matter is equal to or less than -30°C. Preferred examples of the organic emulsion include acrylic emulsion, acrylic styrene emulsion, acrylic silicone emulsion, ethylene vinyl acetate emulsion, silicone emulsion, vinyl acetate acrylic emulsion, vinyl acetate emulsion, vinyl acetate veova emulsion, urethane acrylic composite emulsion, silica modified acrylic copolymer emulsion, styrene acrylic urethane composite emulsion, ethylene vinyl acetate acrylic composite emulsion, vinyl acetate malate copolymer aqueous emulsion, ethylene-vinyl ester copolymer aqueous emulsion, fluorine emulsion or the like.

According to a preferred embodiment of the present invention, it is preferable that 200-500 parts by weight of the inorganic porous material is compounded relative to 100 parts by weight of a dry matter of the organic emulsion. And in this way, excellent moisture absorbing/releasing performance and flexibility can be obtained.

According to another preferred embodiment of the present invention, it is preferable that a formulation ratio in a mixture to form a first layer is 400-1200 parts by volume of the inorganic porous material to 100 parts by volume of an emulsion dry matter of the organic matter. Hereby, excellent moisture absorbing/releasing performance can be obtained and also, a sense of tackiness hardly remains on the surface after being dried and further, flexibility is improved. Therefore, a functional member which can autonomously adjust relative humidity in a space such as a living environment or the like to approximately 40-70% that makes people feel comfortable and further has flexibility can be produced with the improved appearance.

Further, according to a more preferred embodiment of the present invention, it is preferable that a volume of a fine pore of which a diameter is 4-14 nm measured by nitrogen gas adsorption of the inorganic porous material is equal to or more than 0.2 ml/g and that a total volume of all the fine pores each diameter of which is 1-200 nm is equal to or less than 1.3 ml/g. Hereby, an adequate performance to autonomously adjust relative humidity in a space that makes people feel comfortable can be obtained and also moisture in organic emulsion is less likely to fill fine pores, which therefore, improves coatability. Furthermore, in a case where a moisture adjustment is performed so as to obtain preferable viscosity as an coating liquid, a large amount of moisture is not needed, by which the first layer can be efficiently dried and the productivity is improved. Furthermore, a crack can be prevented from being generated on the first layer in drying. A range of a fine pore volume is preferably equal to or less than 1.0 mg/l.

According to a further preferred embodiment of the present invention, it is preferable that the first layer further includes a non-porous filler. In the present invention, the non-porous filler means a filler of which a total pore volume is less than 0.05 ml/g. A shape of the non-porous filler may be any one of a spherical shape, a polyhedron, a flaky shape, a needle shape and the like. The non-porous filler does not absorb water, and therefore, a moisture adjustment of an coating liquid is made easier and also a crack is prevented from being generated on the first layer in drying a coating film. Preferred examples of the non-porous filler include silica, alumina, titania, zirconia, calcium carbonate, calcium hydroxide, aluminum hydroxide, talc, mica, wollastonite or the like.

In an embodiment in use of the non-porous filler described above, it is more preferable that a formulation ratio in a mixture to form a first layer is 400-1100 parts by volume of the inorganic porous material and 50-500 parts by volume of the non-porous filler to 100 parts by volume of an emulsion dry matter of an organic matter, and a total amount of the inorganic porous material and the non-porous filler is 400-1200 parts by volume. Because of the above, a large amount of moisture is not needed in a moisture adjustment of the coating liquid, by which the first layer can be efficiently dried and the productivity is improved. Still further, a crack can be prevented from being generated on the first layer in drying.

Moreover, in an embodiment in use of the non-porous filler described above, it is preferable that a volume of a fine pore of which a diameter is 4-14 nm measured by nitrogen gas adsorption of the inorganic porous material is equal to or more than 0.4 ml/g and that a total volume of all the fine pores each diameter of which is 1-200 nm measured by nitrogen gas adsorption of the inorganic porous material is equal to or less than 1.6 ml/g. Owing to the above, excellent moisture absorbing/releasing performance can be obtained and also a sense of tackiness hardly remains on a surface thereof after being dried, and furthermore, the flexibility is improved. Therefore, a functional member which can autonomously adjust relative humidity in a space such as a living environment to be approximately 40-70% that makes people feel comfortable and also has the flexibility can be produced with the improved appearance.

According to a preferred embodiment of the present invention, a volume average particle size of the non-porous filler is 5-60 μm. Because of the above, a crack is not generated, there are very few uneven portions on the surface, and the improved appearance can be obtained.

According to a preferred embodiment of the present invention, it is preferable that a particle diameter of an organic matter in the organic emulsion to form a first layer is smaller than a particle size of the inorganic porous material and also a number average particle size thereof is equal to or more than 0.2 μm. This prevents an organic matter in the emulsion from being excessively dense, adequately securing a permeation pathway to the inorganic porous material, and moisture absorbing/releasing properties can be fully exhibited. A preferable particle diameter of the organic emulsion is equal to or less than 1 μm.

According to a preferred embodiment of the present invention, it is preferable that the inorganic porous material is an approximately spherical particle. With the use of an approximately spherical particle having an improved fluidity, a filling ratio of the inorganic porous material in the coat is increased, which therefore, can improve moisture absorbing/ releasing performance.

According to a preferred embodiment of the present invention, a coat thickness of the first layer is preferably 50-500 μm. Hereby, adequate moisture absorbing/releasing properties can be exhibited and also weight per unit area thereof is appropriate, and flexibility thereof is suitable for construction. Furthermore, when the coat thickness is in the range described above, a coating method by a comma coater can be used as in the case of a production of normal vinyl cloth. Therefore, productivity thereof is improved.

According to a preferred embodiment of the present invention, 0.1-5 parts by weight of a germicide or a fungicide is compounded in 100 parts by weight of a mixture before being dried to form a first layer. Hereby, excellent antibacterial properties or antifungal properties can be imparted to a functional member. Especially, the functional member of the present invention has excellent moisture absorbing/releasing properties and therefore, is inevitably in a state of constantly containing water vapor, whereby bacteria or molds tend to be generated thereon. For this reason, it can be said that compounding a germicide or a fungicide to the first layer of the functional member is particularly effective. Also, a germicide and a fungicide may be used together or an agent effective to both bacteria and molds may be used.

The germicide and the fungicide in the present invention may be either an organic or inorganic one.

Examples of the organic germicide and fungicide include a germicide and a fungicide such as a type of triazole, alcohol, phenol, aldehyde, carboxylic acid, ester, ether, nitrile, peroxide epoxy, halogen, pyridine quinoline, triazine, isothiazolone, imidazole thiazole, anilide, biguanide, disulfide, thiocarbamate, surfactant or organic metal.

Examples of the inorganic germicide and the fungicide include a germicide and a fungicide such as a type of ozone, chlorine compound, iodine compound, peroxide, boric acid, sulfur, calcium, sodium silicofluoride silico fluoroto sodium or metal ion.

According to a preferred embodiment of the present invention, as the germicide or the fungicide, a metal ion type is preferably used. Such antibacterial metal ions are retained and fixed in a solid more easily compared to hypochlorous acid, ozone or the like. Further, a needed amount of ions can be extracted therefrom by controlling an ion elution rate, and accordingly, the metal ions are suitable for longer-term use. Preferred examples of the antibacterial metal ion include silver ion, copper ion, zinc ion or the like.

Examples of the substance to release the antibacterial metal ion include a compound including a dissoluble antibacterial metal element such as silver lactate, silver nitrate, silver acetate, silver sulfate, cuprous acetate, cupric acetate, copper nitrate, cuprous sulfate, cupric sulfate, zinc acetate, zinc nitrate, zinc chloride, or zinc sulfate. In particular, since a silver ion has a beneficial effect on bacteria, and also a copper ion has a beneficial effect on fungi, it is preferable that one of the ions is selected properly or both of the ions are used together. Further, in order to control a release rate of an antibacterial component or the like, an antibacterial component such as an ion of silver, copper, or zinc, a compound thereof, or single metal colloid may be carried in a pore or a crystal lattice of a carrier of inorganic oxide or the like. Carriers therefor include apatite, calcium phosphate, zirconium phosphate, aluminum phosphate, titania, layered silicate, layered aluminosilicate, zeolite or the like. Furthermore, chlorine resistance may be secured by silver thiosulfate complex which is obtained by anionizing silver ion highly-reactive to chlorine.

Other examples of the germicide or the fungicide include a natural product-derived agent or a fungicide that is obtained from animals or plants. Specific examples thereof include chitin/chitosan, aminoglycoside compound, hinokitiol, mugwort extract, aloe extract, perilla leaf extract, Houttunia cordata, licorice, theaceous plant extract, natural sulfur, mustard/Japanese horseradish extract, bamboo extract or the like. In addition, a photocatalyst may also be used. Examples thereof include anatase titanium dioxide, rutile titanium dioxide, tungsten trioxide, bismuth trioxide, iron trioxide, strontium titanate, tin oxide, zinc oxide or the like. They may be of a spherical shape or a scale shape, fibrous powder, or in a sol state.

According to a preferred embodiment of the present invention, it is preferable that a germicide or fungicide added to the first layer is soluble in water. Hereby, it is possible to provide at a lower cost a functional member that has a humidity controlling performance and that achieves adequate antibacterial properties or antifungal properties over all the layers of a multilayered structure thereof even if the first layer has a higher moisture content. That is, a water-soluble germicide or fungicide is added to the first layer, and thereby, even when the first layer absorbs water vapor to have the higher moisture content, the water-soluble germicide or fungicide is diffused into the entire first layer through the medium of adsorbed water. As a result, adequate antibacterial properties or antifungal properties can be achieved in the first layer. And also, the water-soluble germicide or fungicide is diffused into other layers in addition to the first layer. Consequently, though the germicide or the fungicide is added only to the first layer, adequate antibacterial properties or antifungal properties can be achieved in all the layers of the functional member. It is preferable that the water-soluble fungicide is mainly organic. Specific examples thereof include a water-soluble fungicide such as a type of triazole, alcohol, phenol, aldehyde, carboxylic acid, ester, ether, nitrile, peroxide epoxy, halogen, pyridine quinoline, triazine, isothiazolone, imidazole thiazole, anilide, biguanide, disulfide, thiocarbamate, surfactant, organic metal or the like.

Second Layer

A second layer according to the present invention is a layer comprising an inorganic filler and an organic binder fixing the inorganic filler over an approximately entire surface of the first layer. The second layer can prevent a contaminant such as cigarette tar from being transmitted therethrough to some extent without blocking water vapor transmission. Further, even when the contaminant such as cigarette tar is transmitted through the second layer to be adsorbed in the first layer, it is possible to make a stain adhering to the first layer less visible since the contaminant is concealed by a predetermined amount of the inorganic filler containing in the second layer. And therefore, antifouling properties and appearance thereof are improved.

The second layer is formed over the approximately entire surface of the first layer, thus improving antifouling properties and appearance over the approximately entire surface of the functional member. In the present invention, the approximately entire surface means that 90% or more of the first layer is covered.

The second layer in the present invention contains the organic binder in an amount of 30-300 parts by volume to 100 parts by volume of the inorganic filler. In the range, adequate adhesion to a lower layer can be obtained and also concealing properties to conceal a stain adhering to the first layer are improved, thereby making it possible to improve the appearance. In addition, there is an advantage in cost.

According to a preferred embodiment of the present invention, a coat thickness of the second layer is preferably 1-100 μm. In the range, adequate antifouling properties can be obtained and also, obstruction to the water vapor transmission is reduced and there is a little influence on a moisture absorbing/releasing amount. Additionally, there is an advantage in cost.

According to a preferred embodiment of the present invention, a particle diameter of the inorganic filler is preferably equal to or less than 60 μm. In the range, a space between the particles becomes smaller, thus improving an antifouling effect and making a surface thereof become smooth in appearance.

According to a preferred embodiment of the present invention, it is preferable that the inorganic filler contains either titanium oxide or calcium carbonate. Each of the substances is a white material excellent in concealing properties and efficiently conceals a tar stain adsorbed in the first layer. Further, by forming the second layer with a white material such as titanium oxide or calcium carbonate or the like, a good design is advantageously imparted on the second layer. Furthermore, color pigment is added to the second layer so that the second layer can function as a designed layer. Still further, a designed layer may be formed on a surface of the second layer on which a good design is imparted as described above.

In a preferred embodiment of the present invention, the organic binder is a cured product of the organic emulsion. In this way, it is possible to form a second layer in an industrially lower-cost method. Herein, the organic emulsion means a substance in which organic components are stably dispersed into water.

In a preferred embodiment of the present invention, a glass-transition temperature of the organic matter in the organic emulsion to form a second layer is set to be -10°C to 30°C. When the glass-transition temperature is equal to or more than -10°C, in actual use conditions, in other words, in the vicinity of room temperature, a sense of tackiness is not generated and tar is less likely to adhered to the second layer. Moreover, when the glass-transition temperature is equal to or less than 30°C, the second layer has flexibility, and as a result, the second layer is hardly cracked and even when a flexible base material is folded, there is no fold mark left.

Preferred examples of the inorganic filler used in the second layer according to the present invention include titanium oxide, calcium carbonate, aluminum hydroxide, silica, alumina, zirconia or the like and besides, a natural raw material such as silica sand or porcelain stone crushed material. Examples of the color pigment include metal oxide such as titanium yellow, spinel green, zinc flower, colcothar, chrome oxide, cobalt blue, or iron black; metal hydroxide such as alumina white or yellow iron oxide; ferrocyanide compound such as Prussian blue; lead chromate such as chrome yellow, zinchromate, or molybdenum red; sulfide such as zinc sulfide, vermilion, cadmium yellow, or cadmium red; selenium compound; sulfate such as barite or precipitated barium sulfate; carbonate such as heavy calcium carbonate or precipitated calcium carbonate; silicate such as hydrous silicate, clay, or ultramarine blue; carbon such as carbon black; metal powder such as aluminum powder, bronze powder, or zinc powder; pearl pigment such as mica/titanium oxide; phthalocyanine; azo pigment or the like.

Examples of the organic binder used in the second layer according to the present invention include organic emulsion, water-soluble resin, photocurable resin or the like. From a viewpoint of forming a second layer in the industrially lower-cost method, the organic emulsion is particularly preferable.

Preferred examples of the organic emulsion used in forming a second layer include emulsion such as acryl, acrylic styrene, acrylic silicone, ethylene vinyl acetate, silicone, acrylic vinyl acetate, vinyl acetate, vinyl acetate veova, urethane acryl, styrene acryl urethane composite, ethylene vinyl acetate acrylic composite, vinyl acetate malate copolymer, ethylene-vinyl ester-based copolymer, fluorine, or fluoroacrylate.

In a preferred embodiment of the present invention, the second layer and/or the water repellent layer further comprises at least one of the germicide and the fungicide, thus achieving further antibacterial performance or antifungal performance. The germicide or the fungicide used in the second layer and/or the water repellent layer may be the same as the germicide or the fungicide used in the first layer.

In a preferred embodiment of the present invention, it is preferable that the second layer further comprises a water-repellent additive. With this, it is possible to easily obtain a functional member having antifouling properties to a tar stain and a moisture absorbing/releasing performance and furthermore antifouling properties to a liquid stain. A preferable content of the water-repellent additive in the second layer is 0.1-100 parts by weight to 100 parts by weight of the inorganic filler.

Preferred examples of the water-repellent additive include a silicone type or fluorine resin type. Specific examples of the silicone type water-repellent additive include a silicon compound which has siloxane chain [-Si($R^1$, $R^2$) -O-Si($R^1$, $R^2$)-O-(in the formula, each of $R^1$ and $R^2$ independently represents a hydrogen atom or alkyl group.)], or silane chain [-Si($R^3$, $R^4$)-Si($R^3$, $R^4$)-(in the formula, each of $R^3$ and $R^4$ independently represents a hydrogen atom or alkyl group.)] in a molecule of polysiloxane, polymethylsiloxane, polydimethylsiloxane or the like, or silicone resin or the like.

Specific examples of the fluorine resin type water-repellent additive include organic resin including a fluorine atom in a raw material monomer, more specifically, fluorine resin such as polyethylene tetrafluoride, tetrafluorinated-perfluoro-alkoxyethylene copolymer (PFA resin), polyethylene chloride trifluoride, polyvinylidene fluoride, polyvinyl fluoride or fluoric rubber, or a fluorine-containing surfactant. In the above additives, in terms of water-repellent performance, the fluorine resin additive is preferably used.

Designed layer

According to a preferred embodiment of the present invention, it is preferable that a designed layer is further formed on the surface of the second layer. In the present invention, the designed layer is a layer having a pattern or a design, being embossed, or the like, a material of which is not limited. The designed layer can be formed by the same method as gravure printing, screen printing or the like used in manufacture of normal vinyl cloth.

According to a preferred embodiment of the present invention, it is preferable that the designed layer is formed by foam printing. In this way, a good design is imparted and at the same time, an effect as a contamination control layer of the first layer can be attained as is the case with the second layer. As foam printing paint, printing paint for wall papers that has been conventionally used can be used without any limitation in particular, and specifically, an example thereof includes a paint in which resin and a blowing agent are mixed.

Preferred examples of the resin component include acrylic resin, acrylic styrene resin, acrylic silicone resin, ethylene vinyl acetate resin, silicone resin, vinyl acetate acrylic resin, vinyl acetate resin, vinyl acetate veova resin, urethane acrylic composite resin, silica modified acrylic copolymer resin, styrene acrylic urethane composite resin, ethylene vinyl acetate acrylic composite resin, vinyl acetate malate copolymer aqueous resin, ethylene-vinyl ester-based copolymer aqueous resin, fluorine resin or the like.

As the blowing agent, a conventionally-used decomposition gas-generating blowing agent or an expandable capsule blowing agent or the like can be used. Preferred examples of the decomposition gas-generating blowing agent include azodicarbonamide, dinitroso penta-methylene tetramine, paratoluenesulfonyl hydrazide, benzenesulfonyl hydrazide, sodium bicarbonate, ammonium carbonate or the like. Examples of the expandable capsule blowing agent indlude an agent that contains a hydrocarbon-type volatile expansion component such as ethane, butane, pentane, neopentane, hexane, or heptane in a minute particle containing thermoplastic resin such as acrylic ester, vinylidene chloride, acrylonitrile, or urethane as a coat.

According to a preferred embodiment of the present invention, area coverage of a foam printing layer to the first layer is preferably equal to or more than 60%. And thereby, an effect as the contamination control layer is adequately attained.

According to a preferred embodiment of the present invention, it is preferable that a deodorant is compounded to the foam printing layer. Thereby, a removal function to toxic chemicals, an unpleasant living odor and the like obtained by the first layer can be further improved. Examples of the deodorants include a porous substance to deodorize by physical adsorption, an oxidation-reduction substance and a catalyst substance to deodorize an odor substance by chemical reaction. Examples of the porous substance to deodorize by physical adsorption include, besides the inorganic porous material described above, activated carbon, attached activated carbon, bentonite, silica-magnesia and the like. Examples of the oxidation-reduction substance and the catalyst substance include a metal compound such as sulfate, nitrate, acetate, citrate, organic acid salt, oxide, hydroxide, phthalocyanine complex or other chelate containing a metal selected from manganese, copper, zinc, cobalt, magnesium, iron, nickel, and zinc; a platinum group metal compound; an inorganic substance of a type of iron-manganese, titanium, silica-alumina, metal oxide photocatalyst or the like; organic amines; an artificial enzyme; a clathrate compound such as cyclodextrin or crown ether; and plant extract such as phytoncide, flavonoid, tannin, catechin, and essential oil.

According to a more preferred embodiment of the present invention, it is preferable that a cover layer of a dry matter of a resin colloidal dispersion is further formed on the designed layer surface. Thereby, it is possible to form a contamination control layer without damaging moisture absorbing/releasing properties. A preferred particle size of the resin colloidal dispersion is 1-100 nm, more preferably 5-100 nm. When the particle size is equal to or more than 5 nm, the moisture absorbing/releasing properties are hardly damaged, and when the particle size is equal to or less than 100 nm, a stain such as cigarette tar is less likely to be transmitted, thus providing an effect as the contamination control layer. Preferred examples of the resin colloidal dispersion include a colloidal dispersion such as acryl, acrylic styrene, acrylic silicone, ethylene vinyl acetate, silicone, acrylic vinyl acetate, vinyl acetate, vinyl acetate veova, urethane acryl, styrene acrylic urethane composite, ethylene vinyl acetate acrylic composite, vinyl acetate malate copolymer, ethylene-vinyl ester-based copolymer, fluorine, fluoroacrylate.

Water Repellent Layer

According to a preferred embodiment of the present invention, it is preferable that a water repellent layer is further formed on the second layer surface or the designed layer surface. In the present invention, the water repellent layer is a layer of which a surface comes in contact with water at an angle equal to or more than 90 degrees. Thereby, it is possible to form a surface which prevents water from being transmitted therethrough without deteriorating water vapor transmission. Therefore, antifouling properties to a liquid stain of coffee or the like are improved. The water repellent layer can be formed, for instance, by applying water-repellent resin of a type of olefin, silicone or fluorine, or a water-repellent agent such as wax.

According to a preferred embodiment of the present invention, it is preferable that the designed layer is formed on the second layer surface and further on the surface of the designed layer, a water repellent layer is formed. Also, according to a more preferred embodiment of the present invention, the water-repellent treatment layer is preferably formed on a foam printing layer. Thereby, by a synergistic effect of uneven portions of the foam printing layer and water-repellent properties by water-repellent treatment, that is, so-called a fractal effect, particularly excellent water-repellent properties are achieved, and antifouling properties to a liquid stain are more prominently achieved.

Photocatalyst

According to a preferred embodiment of the present invention, it is preferable that an outermost layer of the functional material further comprises a photocatalyst. Such outermost layers can be the second layer, the designed layer and the water-repellent layer. Moreover, according to another preferred embodiment of the present invention, the photocatalyst may be fixed to the outermost layer of the functional material. Thereby, a function of decomposing adsorbed toxic chemicals can also be imparted.

Examples of the photocatalyst include titanium oxide, zinc oxide, strontium titanate, tin oxide, vanadium oxide or tungsten oxide. Titanium oxide is more preferable in terms of stability of the material itself, a photocatalyst activity, availability and the like, and especially preferably, anatase titanium oxide. According to a more preferred embodiment of the present invention, it is preferable that a metal to impart antibacterial/antifungal performance or improve a photocatalyst activity is carried on the photocatalyst. Examples of such a metal include gold, silver, copper, zinc, platinum or the like.

It is preferable that an amount of adding a photocatalyst particle to the water repellent layer is 1-40 parts by weight to 100 parts by weight of a solid content of the water repellent layer.

Application

An application of the functional member according to the present invention is not particularly limited, and an extremely wide range of applications are considered. Preferred applications include a building interior material for walls, floors, ceilings or the like, and a vehicle interior material for automobiles, trains, ships, aircraft or the like, more preferably, a building wall paper.

When the functional member of the present invention is used as a building wall paper, it is preferable that in order to secure fire resistance, a dry weight of the organic emulsion for the first layer is equal to or less than 100 $g/m^2$,

a dry weight of the organic emulsion for the second layer is equal to or less than 50 g/m$^2$, and a total organic weight including the base material is equal to or less than 300 g/m$^2$.

Method and Coating Liquid for Producing Functional Member

In a method of producing a functional material of the present invention, as an coating liquid to form a first layer, a mixture comprising an inorganic porous material and an organic emulsion is provided. The organic emulsion comprises an organic matter having a glass-transition temperature of -5°C to -50°C. The coating liquid may further comprise a non-porous filler.

After that, the coating liquid is applied on a flexible base material to be dried for forming a first layer. The application of the coating liquid on the base material can be performed, for instance, by dipping, spin coating, spraying, printing, flow coating, roll coating, a combination thereof or the like. A coat thickness of the first layer can be controlled by changing a lifting speed in dipping, changing a substrate rotating speed in spin coating, changing a solid content concentration or viscosity of the coating liquid, or the like.

When the coating liquid to form a first layer is mechanically applied by a comma coater or the like, it is preferable that an amount of water contained in the coating liquid is 20-80 parts by weight to 100 parts by weight of a solid content thereof and the viscosity is 2000-8000 mPa·s. Hereby, the first layer can be coated on the base material surface suitably.

Drying and curing an coating liquid to form a first layer may be performed by either drying at room temperature or forcible heating. The forcible heating can be performed by heating and drying with far infrared radiation, drying by hot air heating, or the like. In this case, the drying temperature is preferably equal to or more than 100°C in terms of productivity.

Further, a mixture of an inorganic filler and an organic binder is applied over an approximately entire surface of the first layer to form a second layer. The mixture is adjusted so that the organic binder is contained in an amount of 30-300 parts by volume to 100 parts by volume of the inorganic filler.

Application of the mixture to form a second layer can be performed by known application methods, but is preferably performed by a gravure printing method, a screen printing method or a combination thereof. In this case, a coat thickness thereof can be adjusted by controlling a solid content concentration or viscosity of the coating liquid containing the inorganic filler or by controlling a printing speed. It should be noted that, in order to form a second layer as a thin layer, use of the gravure printing method is preferable.

Preferred dilute solutions for adjusting the solid content concentration or viscosity of the coating liquid to form a second layer include water or alcohol such as isopropylalcohol or ethanol. Industrially, the alcohol dilute solution is preferably used, whereby a drying temperature after coating can be lower and the drying time can also be shorter.

Drying and curing of the coating liquid to form a second layer may be performed by either drying at room temperature or forcible heating. The forcible heating can be performed by heating and drying with far infrared radiation, drying by hot air heating or the like. In this case, the heating temperature is preferably equal to or more than 100°C in terms of productivity.

According to a preferred embodiment of the present invention, it is preferable that the coating liquid to form a designed layer or a water repellent layer is further applied on the second layer surface to be dried. The designed layer or the water repellent layer can be formed by known application methods, but is preferably formed by a gravure printing method, a screen printing method, or a combination thereof. Drying and curing of the water repellent layer may be performed by either drying at room temperature or forcible heating, but is preferably performed by forcible heating in terms of productivity. The forcible heating can be performed by heating/drying with far infrared radiation, drying by hot air heating or the like. At the time, the heating temperature is preferably equal to or higher than 100°C in terms of productivity.

BRIEF DESCRIPTION OF THE DRAWINGS

Fig. 1 is a view showing an example of a layered structure of a functional material according to the present invention and corresponds to a sample produced in Example A1. The functional material comprises a base material 1, a first layer 2 formed on the base material 1 and further a second layer 3 formed on the first layer 2.

Fig. 2 is a graph showing an evaluation result of moisture absorbing/releasing performance of each of samples produced in Examples A1 to A3 and A7 and Comparative Examples A1 and A3 to A5.

Fig. 3 is a view showing a layered structure of a functional material produced in Example A2. The functional material comprises a base material 1, a first layer 2 and second layer 3 formed on the base material 1, and further a water repellent layer 4 formed on the second layer 3.

Fig. 4 is a view showing a layered structure of a functional material produced in Example A3. The functional material comprises a base material 1, a first layer 2 and second layer 3 formed on the base material 1, and furthermore a designed layer 5 and water repellent layer 4 formed on the second layer 3.

Fig. 5 is a view showing a layered structure of a functional material produced in Example A4. The functional material comprises a base material 1, a first layer 2 and second layer 3 formed on the base material 1, and a germicide 6 added into the second layer 3.

Fig. 6 is a view showing a layered structure of a functional material produced in Example A5. The functional material comprises a base material 1, a first layer 2 and second layer 3 formed on the base material 1, and a fungicide 7 added into the second layer 3.

Fig. 7 is a view showing a layered structure of a functional material produced in Example A6. The functional material comprises a base material 1, a first layer 2 and second layer 3 formed on the base material 1, furthermore a water repellent layer 4 formed on the second layer 3, and a photocatalyst 8 added into the water repellent layer 4.

Fig. 8 is a view showing a layered structure of a functional material produced in Example A7. The functional material comprises a base material 1, a first layer 2 and second layer 3 formed on the base material 1, and a water-repellent additive 9 added into the second layer 3.

Fig. 9 is a view showing a layered structure of a functional material produced in Example A8. The functional material comprises a base material 1, a first layer 2 formed on the base material 1, and furthermore a colored second layer 10 formed on the first layer 2.

Fig. 10 is a view showing a layered structure of a functional material produced in Example A9. The functional material comprises a base material 1, a first layer 2 and colored second layer 10 formed on the base material 1, and furthermore a designed layer 5 and water repellent layer 4 formed on the colored second layer 10.

Fig. 11 is a view showing a layered structure of a material produced in a Comparative Example A1. The material comprises a base material 1 and a first layer 2 formed on the base material 1.

Fig. 12 is a view showing a layered structure of a material produced in Comparative Example A2. The material comprises a base material 1, a first layer 2 formed on the base material 1, and furthermore a water repellent layer 4 formed on the first layer 2.

Fig. 13 is a view showing a layered structure of a material produced in Comparative Example A3. The material comprises a base material 1, a first layer 2 formed on the base material 1, and furthermore a laminate film 11 formed on the first layer 2.

Fig. 14 is a view showing a layered structure of a material produced in Comparative Example A4. The material comprises a base material 1, a first layer 2 formed on the base material 1, and furthermore urethane resin 12 formed on the first layer 2.

## EXAMPLES

The present invention will be explained in more detail with reference to the following examples, but is not limited to these examples.

Measuring methods of properties in raw materials with respect to the following examples and comparative examples are as follows.

Measurement 1: Measurement of a fine pore diameter and a fine pore volume of an inorganic porous material

With respect to a sample of approximately 0.2 g, the measurement of a pore diameter and a pore volume thereof was made using a specific surface area/pore distribution measurement device (ASAP 2000, made by Micromeritics, Inc.). This measuring device measures adsorption/desorption isotherms of a nitrogen gas in each sample and measures fine pore diameters and volumes using the desorption isotherm. In addition, prior to the measurement, an inside of the device is heated and degassed to less than $10^{-3}$ Torr at a temperature of $110°C$, thereby removing adsorbed components such as water vapors.

Measurement 2: Measurement of an average particle size of an inorganic porous material and an inorganic filler

The measurement of a volume average particle size was made using a laser diffraction/scattering particle distribution measuring device (Laser micronsizer LMS-30 made by SEISHIN ENTERPRISE CO., LTD.).

Measurement 3: Measurement of bulkiness density of an inorganic porous material, a non-porous filler, and an inorganic particulate

The measurement of bulkiness density was made using a tap density measuring device (Tap denser-KYT-4000 made by SEISHIN ENTERPRISE CO., LTD.).

Measurement 4: Measurement of an average particle size of organic emulsion

The measurement of a number average particle size was made using a laser diffraction/scattering particle distribution measuring device (Laser micronsizer LMS-30 made by SEISHIN ENTERPRISE CO., LTD.).

Measurement 5: Measurement of an average particle size of resin colloidal dispersion

The measurement of a number average particle size was made using Micro trap UPA 150 of NIKKISO Co., Ltd. by a dynamic light scattering method.

Measurement 6: Calculation of glass-transition temperature of organic emulsion and resin colloidal dispersion

In the case where organic matters dispersed in the organic emulsion used in the Examples or resin dispersed in the resin colloidal dispersion used in the Examples were copolymers, a glass-transition temperature Tg of the organic matter and the resin was calculated using a glass-transition temperature of a homo polymer according to the following formula.

$$1/Tg = \sum_{i=1}^{n} (Wi / Tgi)$$

(in the formula, Tg: Tg (K) of copolymer, Tgi: Tg (K) of homo polymer of copolymerization monomer, Wi: weight percentage of copolymerization monomer)
It should be noted that Tg of a homo polymer of a copolymerization monomer, namely Tgi, was used based upon the standard of Japan Emulsion Industry.

Measurement 7: Measurement of bulkiness density of a dry matter of organic emulsion

Organic emulsion dispersion liquid was dried and bulkiness density of the dry matter was measured by an Archimedes method. In this case, kerosene was used as a solvent to measure it in such a manner as not to re-dissolve the dry matter.
An evaluation test method of a functional material sample produced in the following examples and comparative examples is as follows.

Test 1: Adhesion promotion test of cigarette tar

A box of 3600 cm$^3$ was prepared, only a bottom part of which was opened. A sample (5×5 cm) was attached to a side face of the box. Cigarette smoke was put in through the bottom part of the box where the tar was adhered for 30 minutes. A contamination state before and after tar adhesion was measured using a color difference meter (ND-300A made by NIPPON DENSHOKU CO., LTD.). Five pieces of Mild Seven made by JT (tar 12 mg/piece, nicotine 0.9 mg/piece) were used as cigarette.

Test 2: Measuring method of moisture absorbing and releasing characteristics

First, the measuring sample was forced to equilibrium in a vessel at a constant temperature of 23°C and at constant humidity of 33% R.H. Next, the sample was put in a vessel at a constant temperature of 23°C and at constant humidity of 93% R. H. to measure a moisture absorbing amount for 24 hours. And the sample was put again in a vessel at a constant temperature of 23°C and at constant humidity of 33% R.H. to measure a moisture releasing amount.

Test 3: Contamination resistant properties evaluation test

A staining matter was dropped on a sample surface (surface on which a second layer was formed) and 24 hours later, a wiping test was made by JK wiper (150 - s made by CRECIA Corp.). The evaluation standard is as follows.
Coffee, soy sauce, and aqueous blue ink were used as staining matters.

A: Stain traces disappeared by wiping with water.

B: Stain did not disappear by wiping with water, but after the sample surface was properly wiped with synthetic detergent concentrate solution, the sample surface was further wiped with water, and the sample surface was wiped without water, so that the stain traces disappeared.

C: After the sample surface was properly wiped with synthetic detergent concentrate solution, it was further wiped with water, and then, even if it was wiped without water, the stain traces still remained on the sample surface.

Test 4: Evaluation of antibacterial properties

An antibacterial evaluation was made according to a film adhesion method defined in JIS Z 2801 (2000 year). With respect to strains to be used, staphylococcus aureus was used as gram positive bacteria and coli bacteria was used as gram negative bacteria according to JIS Z 2801 (2000 year). Evaluation methods of results all were made based upon JIS Z 2801, and samples having antibacteria active value of 2.0 or more were evaluated as having antibacteria properties.

Test 5: Evaluation of antifungal properties

The test was made based upon a nutrition addition wet method among antifungal test methods stipulated by Japan Health Housing Association. Aspergillus niger was used as strains. Evaluation methods of results all were made based upon the antifungal test method stipulated by Japan Health Housing Association. Concretely, the evaluation standard is as follows.

5: no growth of fungal threads, even under the 40 time microscope

4: growth of fungal threads is not visible to the naked eye, but growth of fungal threads is slightly found out under the 40 time microscope.

3: growth of fungal threads is visible to the naked eye off and on, and growth of fungal threads is remarkably found out under the 40 time microscope.

2: colony generation of fungus on 1/2 of the entire surface of one side of the sample is clearly visible to the naked eye.

1: growth of fungus is clearly visible to the naked eye, and the growth of fungus spreads over the entire surface of one side of the sample.

Test 6: Evaluation of flexibility

The sample was folded by 180 degrees and appearance of the folded portion was evaluated visually. The evaluation standard is as follows.

A: no crack

B: partial crack

C: crack over the entire surface

Test 7: Evaluation of firesafety

Concalory meter test stipulated under Building Standard Law was made. The evaluation result was made based upon Building Standard Law to label samples having 8 MJ/m$^2$ or less as passing the test.

Test 8: Appearance evaluation of produced coat state

The produced coat state of the first layer was evaluated visually. The evaluation standard is as follows.

A: good

B: slightly bad

C: defective

Test 9 : Measuring method of contacting angle

A contacting angle at the time when distilled water of 10 μl was dropped on a sample surface was measured by a contacting angle measuring device (CA - X type made by Kyowa Interface Science Co., Ltd.).

Example A1

As a base material, a base material paper for wall papers having three layered structure composed of a backing paper, a film, and a non-woven fabric was prepared. The weight of the base material paper for wall papers was 111 g/m $^2$. Activated alumina was prepared as an inorganic porous material. Measurements 1 and 2 were made with respect to the activated alumina. As a result, the volume of the fine pore having a diameter of 4 to 14 nm was 0.41 ml/g, the total fine pore volume was 0.50 ml/g, and the average particle diameter was 30 μm. Acrylic emulsion was prepared as organic emulsion. The measurements 4 and 6 were made with respect to the emulsion. As a result, the glass transition temperature was - 43°C, and the average particle size was 0.25 μm, and the active substance were 60%.

Raw materials were put into the mixer based upon the formulation shown in Table 1 and mixed therein to obtain coating liquid. This coating liquid was applied on the base material using a comma coater in such a manner that the thickness of the first layer after drying became 350 μm and dried the coating liquid at 150°C to form the first layer. The weight of the organic matter after drying was 80 g/m$^2$.

Table 1

| Formulation of a Mixture Comprising an Inorganic Porous Material and Organic Emulsion | |
|---|---|
| Formulation | Part by Weight |
| Activated alumina | 70 |
| Acrylic emulsion | 30 |
| Dispersing agent [Flowlen TG - 750 W made by Kyoeisya Chemical Co., Ltd.] | 17.5 |
| Wetting agent [Flowlen D - 90 made by Kyoeisya Chemical Co., Ltd.] | 0.5 |
| Defoamer [Aqualen 8020 made by Kyoeisya Chemical Co., Ltd.] | 0.5 |
| Water | 40 |

The coating liquid was prepared based upon the formulation in Table 2. This coating liquid was applied on the first layer by a screen printing so that the thickness of the second layer after drying became 10 μm. Subsequently, a sample was dried at 150°C to obtain the sample having a layered structure shown in Fig. 1. The weight of the organic matter after drying was 10 g/m$^2$. Titanium oxide and calcium carbonate were used as an inorganic filler. An average particle diameter of the titanium oxide was 5 μm and an average particle diameter of the calcium carbonate was 3 μm. Organic emulsion of ethylene-vinyl acetate was used as an organic binder. A glass-transition temperature of an organic matter of the organic emulsion was 0°C.

Table 2

| Formulation | Part by Weight |
|---|---|
| Titanium oxide | 10 |
| Calcium carbonate | 20 |
| Organic emulsion | 25 |
| Dispersing agent [Flowlen TG - 750 W made by Kyoeisya Chemical Co., Ltd.] | 3 |
| Wetting agent [Flowlen D - 90 made by Kyoeisya Chemical Co., Ltd.] | 0.4 |
| Defoamer [Aqualen 8020 made by Kyoeisya Chemical Co., Ltd.] | 0.2 |
| Water | 10 |

Example A2

The coating liquid was prepared based upon the formulation in Table 3. There was used a water repellent additive made by distilling fluoro acrylate water repellent additive Ode KCRDO varnish [active substance 15 wt%] made by Intec Corp. with an Ode KS solvent made by Intec Corp. comprising isopropyl alcohol and water. This coating liquid was applied on the second layer of the sample produced in Example A1 by gravure printing so that the thickness of the second layer after drying became 0.2 µm. Subsequently, a sample was dried at 150°C to obtain the sample where a water repellent layer was further formed as shown in Fig. 3.

Table 3

| Formulation | Part by weight |
|---|---|
| Fluoro acrylate water repellent additive | 100 |
| Ode KS solvent | 30 |

Example A3

An image was printed on the second layer of the sample produced in Example A1 by a gravure printing method to form a designed layer. A sample shown in Fig. 4 was obtained by forming a water repellent layer on the designed layer the same as in Example A2.

Example A4

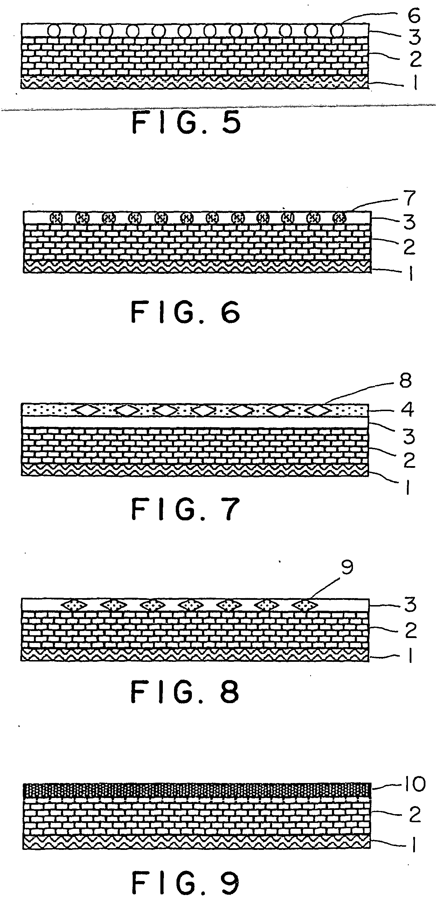

A sample shown in Fig. 5 was produced the same as in Example A1 except that three parts by weight of a commercially available germicide where silver was carried in zeolite were added to 68.6 parts by weight of the coating liquid to form a second layer.

Example A5

A sample shown in Fig. 6 was produced the same as in Example A1 except that 0.5 parts by weight of a commercially available triazole fungicide were added to 68.6 parts by weight of the coating liquid to form a second layer.

Example A6

A sample shown in Fig. 7 was produced the same as in Example A2 except that five parts by weight of commercially available photocatalystic titanium oxide powder were added to 130 parts by weight of the coating liquid to form a water repellent layer.

Example A7

A sample shown in Fig. 8 was produced the same as in Example A1 except that five parts by weight of a fluoric water repellent additive were added to 68.6 parts by weight of the coating liquid to form a second layer.

Example A8

A sample shown in Fig. 9 was produced the same as in Example A1 except that one part by weight of phthalocyanine blue as color pigment was added to 68.6 parts by weight of the coating liquid to form a second layer.

Example A9

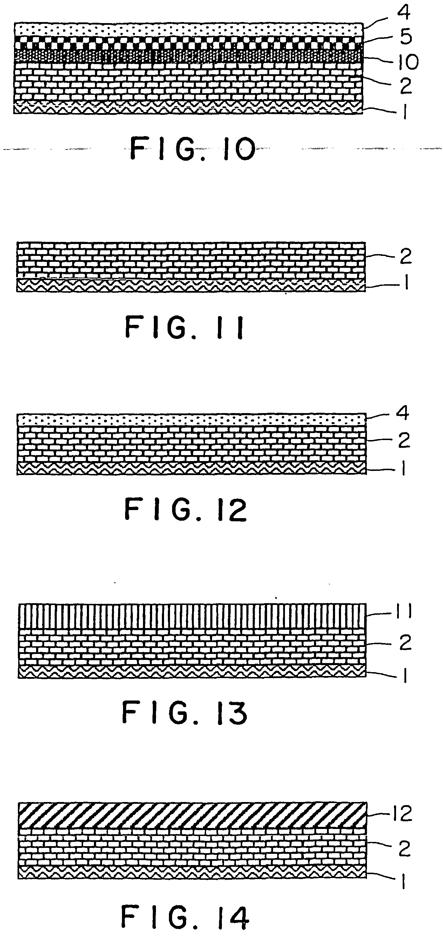

An image was printed on the second layer of the sample produced in Example A8 by a gravure printing method to form a designed layer. A sample shown in Fig. 10 was obtained by forming a water repellent layer on the designed layer the same as in Example A2.

Comparative Example A1

A sample shown in Fig. 11 where only the first layer was formed was produced the same as in Example A1 except that the second layer was not formed.

Comparative Example A2

A sample shown in Fig. 12 was produced by forming the water repellent layer the same as in Example A2 on the first layer of the sample obtained in Comparative Example A1.

Comparative Example A3

A sample where only the first layer was formed was produced the same as in Example A1 except that the second layer was not formed. A sample shown in Fig. 13 where a moisture permeable/water proofing film was laminated on the first layer was produced. As the moisture permeable/water proofing film, a polyethylene porous film (Polum PUH 35 having 35 μm thickness and 1.1 μm maximum fine pore diameter made by TOKUYAMA Corp.) was used.

Comparative Example A4

A sample where only the first layer was formed was produced the same as in Example A1 except that the second layer was not formed. Water polyurethane resin was applied on the first layer by a gravure printing method so that the thickness thereof after drying became 5 μm to be dried, thereby producing a sample shown in Fig. 14. As the water polyurethane resin, a surface treatment agent for Daiplacoat AQW (product name) made by Dainichiseika Color & Chemicals Mfg. Co., Ltd.) was used.

Comparative Example A5

A commercially available vinyl cloth was used as a sample.
With respect to each sample of Examples A1 to A9 and Comparative Examples A1 to A5 obtained, tests 1 to 7 were made. The result is as follows.

Table 4

| | Tar $\Delta E$ | Moisture Absorbing Properties $(g/m^2)$ | Moisture Releasing Properties $(g/m^2)$ | Coffee | Soy Sauce | Water Soluble Blue Ink |
|---|---|---|---|---|---|---|
| Example A1 | 9.4 | 100 | 100 | B | B | B |
| Example A2 | 8.7 | 99 | 99 | A | A | A |
| Example A3 | 7.6 | 99 | 99 | A | A | A |
| Example A4 | 9.1 | 98 | 98 | B | B | B |
| Example A5 | 8.6 | 97 | 97 | B | B | B |
| Example A6 | 8.8 | 98 | 98 | A | A | A |
| Example A7 | 9.2 | 99 | 99 | A | A | A |
| Example A8 | 7.9 | 98 | 98 | B | B | B |
| Example A9 | 7.6 | 96 | 96 | A | A | A |
| Comparative Example A1 | 22.5 | 101 | 101 | B | B | B |
| Comparative Example A2 | 19.7 | 98 | 98 | A | A | A |
| Comparative Example A3 | 12.5 | 61 | 58 | A | A | B |
| Comparative Example A4 | 10.5 | 76 | 75 | A | A | B |
| Comparative Example A5 | 8.9 | 8 | 8 | B | B | C |

Test 1: as shown in Table 4, it is found out that the samples of Examples A1 to A9 each having the first layer and the second layer have excellent antifouling properties to cigarette tar as compared to the samples of Comparative Examples A1 and A2 without the second layer.
Test 2: as shown in Table 4, it is found out that moisture absorbing/releasing properties of the samples of Examples A1 to A9 do not deteriorate nearly as compared to the samples of Comparative Example A1 without the second layer. And it is found out that moisture absorbing/releasing rates of the samples of Examples A1 to A9 do not deteriorate nearly, either as shown in Fig. 2.

In Example A4 and Example A5 in which a germicide and a fungicide were compounded in the second layer, antifouling properties to tar and moisture absorbing /releasing properties both were good regardless of addition of the germicide and the fungicide. With respect to Example A3 where the designed layer was formed between the second layer and the water repellent layer, Example A8 where color pigment was added to the second layer, and Example A9 where the designed layer and the water repellent layer were further formed in the sample of Example A8, the antifouling properties to tar and the moisture absorbing/releasing performance both were good.

In the sample of Comparative Example A3 where the moisture permeable/water proofing film was laminated and in the sample of Comparative Example A4 using the urethane resin, the antifouling properties to tar were exhibited to some degrees, but an effect of the antifouling properties was smaller as compared to the Examples, and the moisture absorbing/releasing performance was deteriorated. The moisture absorbing /releasing rate was remarkably lowered as clearly shown in Fig. 2.

Test 3: As shown in Table 4, with respect to Examples A2 and A6 where the water repellent layer was formed on the second layer, Examples A3 and A9 where the designed layer and the water repellent layer were formed on the second layer, and Example A7 where the water repellent additive was compounded in the second layer, it is found out that the antifouling properties to stain of liquid such as coffee are also good.

Test 4: Table 5 shows the evaluation result of antibacterial performance.

Table 5

| Example | Antibacteria Active Value | |
|---|---|---|
| | Staphylococcus aureus | Coli bacteria |
| Example A4 | 4.1 | 6.5 |
| Comparative Example A1 | 0.1 | 0.2 |
| Comparative Example A5 | 0.2 | 0.1 |

As clearly seen from Table 5, with respect to the sample of Example A4 where a germicide was compounded, the antibacterial active value thereof was far beyond 2.0 in the staphylococcus aureus and the coli bacteria, and good antibacterial properties were confirmed. On the other hand, in the commercially available vinyl clothes of Comparative Example A1 and Comparative Example A5 where the germicide was not compounded, the antibacterial properties were not found out.

Test 5 : Table 6 shows the evaluation result of antifungal performance.

Table 6

| Example | Evaluation |
|---|---|
| Example A5 | No growth of fungal thread |
| Comparative Example A1 | Growth of fungus on the entire surface of one side of the test piece |
| Comparative Example A5 | Growth of fungus on 1/2 of the entire surface of one side of the test piece |

As clearly seen from Table 6, with respect to the sample of Example A5 where the fungicide was compounded, growth of the fungal threads was not found out even under the 40 time microscope and good antifungal performance was confirmed. On the other hand, in the commercially available vinyl clothes of Comparative Example A1 and Comparative Example A5 where the fungicide was not compounded, the antifungal performance was not found out.

Test 6: Evaluation of flexibility

All of the evaluation results of the samples in Examples A1 to A9 were "A" (no crack).

Test 7: Evaluation of firesafety

All of the samples of Examples A1 to A9 showed a total heat value of 8 MJ/m$^2$ or less and "passed."

Example B1

As a base material, a base material paper for wall papers having three layered structure comprising a backing paper, a film, and a non-woven fabric was prepared. The weight of the base material paper for wall papers was 111 g/m$^2$. A commercially available triazole fungicide was prepared as a water soluble fungicide. Activated alumina was prepared as an inorganic porous material. Measurements 1 and 2 were made with respect to the activated alumina. As a result, the volume of the fine pore diameter of 4 to 14 nm was 0.41 ml/g, the total fine pore volume was 0.50 ml/g, and the average particle diameter was 30 μm. Commercially available acrylic emulsion was prepared as organic emulsion. The measurements 4 and 6 were made with respect to the emulsion. As a result, the glass-transition temperature was - 43°C, and the average particle size was 0.25 μm, and the active substance were 60%.

Raw materials were put in the mixer based upon the compound shown in Table 7 and mixed therein to obtain an coating liquid. This coating liquid was applied on the base material using a comma coater in such a manner that the thickness after drying became 350 μm, and dried the coating liquid at 150°C to form a first layer.

Table 7

| Formulation of Humidity-controlling Layer Coating Composition | |
|---|---|
| Formulation | Part by weight |
| Activated alumina | 70 |
| Acrylic emulsion | 30 |
| Triazole fungicide | 0.5 |
| Dispersing agent [Flowlen TG- 750 W made by Kyoeisya Chemical Co., Ltd.] | 17.5 |
| Wetting agent [Flowlen D - 90 made by Kyoeisya Chemical Co., Ltd.] | 0.5 |
| Defoamer [Aqualen 8020 made by Kyoeisya Chemical Co., Ltd.] | 0.5 |
| Water | 40 |

The coating liquid was prepared based upon the compound in Table 8. This coating liquid was applied on the first layer by screen printing to form a second layer thereon.

Table 8

| Compound | Part by Weight |
|---|---|
| Titanium oxide | 10 |
| Calcium carbonate | 20 |
| Organic emulsion | 20 |
| Dispersing agent | 3 |
| Wetting agent | 0.4 |
| Antifoamer | 0.2 |
| Water | 10 |

Next, The foam print paint was prepared based upon the formulation in Table 9. After the paint was coated by screen printing, the paint was heated at 150°C to foam the paint, thereby producing a functional wall paper where the designed layer was further formed on the second layer.

Table 9

| Formulation of Foam Printing Paint | |
|---|---|
| Formulation | Part by Weight |
| Ethylene-polyvinyl acetate copolymer emulsion [Panflex OM 4200 made by KURARAY CO., LTD.] | 100 |
| Foaming agent [AZ# 3051 made by Otsuka Chemical Co., Ltd.] | 6 |
| Calcium carbonate | 20 |

Table 9   (continued)

| Formulation of Foam Printing Paint | |
|---|---|
| Formulation | Part by Weight |
| Titanium oxide for pigment | 15 |
| Water | 20 |

With respect to the sample of Example B1 obtained, Tests 1, 2, 5, and 6 were made. The result is as follows.

Test 1: The result for cigarette stain test showed that the color difference $\Delta E *$ was 8.4.
Test 2: Moisture absorbing properties were 101 $g/m^2$ and moisture releasing properties were 100 $g/m^2$.
Test 5: Evaluation of antifungal properties was [5].
Test 6: Evaluation of flexibility was "A" (no crack).

Comparative Example B1

A first layer was formed the same as in Example B1 except that instead of the water soluble fungicide of Example B1, a commercially available water insoluble fungicide where copper was fixed to titanium oxide was used and formation of the second layer was not made.
With respect to the sample of the Comparative Example B 1, Tests 1, 2, 5, and 6 were made.
The result is as follows.

Test 1: The result for cigarette stain test showed that the color difference $\Delta E *$ was 15.8.
Test 2: Moisture absorbing properties were 100 $g/m^2$ and moisture releasing properties were 99 $g/m^2$.
Test 5: Evaluation of antifungal properties was "1".
Test 6: Evaluation of flexibility was "A" (no crack).

Example C1

As a flexible base material, a base material paper for wall papers having three layered structure comprising a backing paper, a film, and a non-woven fabric was prepared. Commercially available activated alumina was prepared as an inorganic porous material. Measurements 1 to 3 were made with respect to the activated alumina. As a result, the volume of the fine pore having a diameter of 4 to 14 nm was 0.46 ml/g, the total fine pore volume was 0.50 ml/g, the bulkiness density was 680 g/L, and the average particle size was 30 μm. Commercially available acrylic emulsion was prepared as organic emulsion. Measurements 4 and 6 were made with respect to the emulsion. As a result, the glass-transition temperature was - 43°C, the active substance was 60%, the bulkiness density of the dry matter was 1200 g/L, and the average particle size was 0.2 μm. Raw materials were put in the mixer based upon the formulation shown in Table 10 and mixed therein to obtain an coating liquid. This coating liquid was applied on the base material using a comma coater in such a manner that the thickness after drying became 300 μm, to form a first layer.

Table 10

| Formulation | Part by Weight (Part by Volume) |
|---|---|
| Activated alumina | 75 (441) |
| Acrylic emulsion(active substance) | 30 (100) |
| Dispersing agent | 17.5 |
| Wetting agent | 0.5 |
| Antifoamer | 0.5 |
| Water | 40 |

Titanium oxide and calcium carbonate were prepared as an inorganic particulate. When the measurement 2 was made with respect to the inorganic particulate, an average particle diameter of the titanium oxide was 5 μm and an average particle diameter of the calcium carbonate was 3 μm. Organic emulsion (ethylene vinyl acetate) was prepared as an organic binder. When the measurement 6 was made with respect to the organic emulsion, the glass-transition temperature was 0°C. Next, the coating liquid was prepared based upon the formulation in Table 11. The coating liquid was applied on the first layer by screen printing so that the thickness of the second layer after drying

was 10 μm. Next, the coating liquid was dried at 150°C to obtain a functional member where the second layer was formed on the first layer.

Table 11

| Formulation | Part by Weight |
|---|---|
| Titanium oxide | 10 |
| Calcium carbonate | 20 |
| Organic emulsion | 20 |
| Dispersing agent | 3 |
| Wetting agent | 0.4 |
| Antifoamer | 0.2 |
| Water | 10 |

Example C2

The functional member where the second layer was formed on the first layer was produced the same as in Example C1. Next, a foam print paint was prepared based upon the formulation in Table 12. After the paint was applied by screen printing, the paint was heated at 150°C to foam the paint, thereby producing a functional member where a designed layer was further formed on the second layer.

Table 12

| Formulation | Part by Weight |
|---|---|
| Ethylene-polyvinyl acetate copolymer emulsion [Panflex OM 4200 made by KURARAY CO., LTD.] | 100 |
| Foaming agent [AZ# 3051 made by Otsuka Chemical Co., Ltd.] | 6 |
| Calcium carbonate | 20 |
| Titanium oxide for pigment | 15 |
| Water | 20 |

Example C3

The functional member where the second layer and the designed layer were formed on the first layer was produced the same as in Example C2. Next, a water repellent treatment agent was prepared based upon the formulation in Table 13. After the water repellent treatment agent was applied by gravure printing, thereby producing a functional member where a water repellent treatment layer was further formed on the designed layer.

Table 13

| Formulation | Part by Weight |
|---|---|
| Water repellent treatment agent [Asahi guard AG - 533 made by Asahi Glass Corp.] | 9 |
| Viscosity increasing agent | 0.5 |
| Water | 200 |

With respect to the samples of Examples C1 to C3 obtained, Tests 1 to 3, 6, 8, and 9 were made. The result is as follows.

## Table 14

|  | Appearance | Flexibility | Moisture Absorbing Properties | Moisture Releasing Properties | Cigarette Stain | Contamination Resistant Properties | Contacting Angle (degree) |
|---|---|---|---|---|---|---|---|
| Example C1 | A | A | 109 | 108 | 8.1 | A | 84 |
| Example C2 | A | A | 103 | 101 | 6.7 | A | 92 |
| Example C3 | A | A | 102 | 101 | 6.4 | A | 121 |

EP 1 607 215 A1

**Claims**

1. A functional member, comprising:

   a flexible base material,
   a first layer which is formed on the base material and comprises a dry matter of a mixture comprising an inorganic porous material and an organic emulsion, and
   a second layer comprising an inorganic filler which is fixed over an approximately entire surface of the first layer by an organic binder,

   wherein the organic matter in the organic emulsion has a glass-transition temperature of -5°C to -50°C; and
   wherein the organic binder in the second layer is contained in an amount of 30-300 parts by volume to 100 parts by volume of the inorganic filler.

2. The functional member according to claim 1, wherein the second layer has a coat thickness of 1 to 100 µm.

3. The functional member according to claim 1 or 2, wherein the inorganic filler has a particle size of equal to or less than 60 µm.

4. The functional member according to any one of claims 1 to 3, wherein the inorganic filler comprises at least one of the titanium oxide and calcium carbonate.

5. The functional member according to any one of claims 1 to 4, wherein the organic binder is a cured matter of the organic emulsion.

6. The functional member according to claim 5, wherein the glass-transition temperature of the organic matter in the organic emulsion for the second layer is -10°C to 30°C.

7. The functional member according to any one of claims 1 to 6, further comprising a designed layer formed on a surface of the second layer.

8. The functional member according to any one of claims 1 to 7, further comprising a water repellent layer formed on a surface of the second layer or on a surface of the designed layer.

9. The functional member according to any one of claims 1 to 8, wherein the second layer further comprises at least one of a germicide and a fungicide.

10. The functional member according to claim 8 or 9, wherein the water repellent layer further comprises at least one of a germicide and a fungicide.

11. The functional member according to any one of claims 1 to 10, wherein the second layer further comprises a photocatalyst.

12. The functional member according to any one of claims 8 to 11, wherein the water repellent layer further comprises a photocatalyst.

13. The functional member according to any one of claims 1 to 12, wherein the second layer further comprises a water repellent additive.

14. The functional member according to any one of claims 1 to 13, having a volume of a fine pore of which a diameter is 4-14 nm measured by nitrogen gas adsorption of the inorganic porous material being equal to or more than 0.1 ml/g; and a total volume of all the fine pores of which each diameter is 1-200 nm measured by nitrogen gas adsorption of the inorganic porous material being equal to or less than 1.5 ml/g.

15. The functional member according to any one of claims 1 to 14, wherein the first layer comprises 200 to 500 parts by weight of the inorganic porous material to 100 parts by weight of a dry matter in the organic emulsion.

16. The functional member according to any one of claims 5 to 15, wherein the organic emulsion for the first layer has a dry weight of equal to or less than 100 g/m$^2$; the organic emulsion for the second layer has a dry weight of equal to or less than 50 g/m$^2$; and the functional member has a weight of all organic matters including the base material of equal to or less than 300 g/m$^2$.

17. The functional member according to any one of claims 1 to 16, wherein the first layer further comprises a water soluble fungicide.

18. The functional member according to any one of claims 1 to 17, wherein the first layer comprises 400 to 1200 parts by volume of the inorganic porous material to 100 parts by volume of the dry matter in the organic emulsion.

19. The functional member according to claim 18, having a volume of a fine pore of which a diameter is 4-14 nm measured by nitrogen gas adsorption of the inorganic porous material being equal to or more than 0.2 ml/g; and a total volume of all the fine pores of which each diameter is 1-200 nm measured by nitrogen gas adsorption of the inorganic porous material being equal to or less than 1.3 ml/g.

20. The functional member according to any one of claims 1 to 17, wherein the first layer further comprises a non-porous filler.

21. The functional member according to claim 20, wherein the first layer comprises 400 to 1100 parts by volume of the inorganic porous material and 50 to 500 parts by volume of the non-porous filler to 100 parts by volume of the dry matter in the organic emulsion; and a total amount of the inorganic porous material and the non-porous filler is 400 to 1200 parts by volume.

22. The functional member according to claim 20 or 21, having a volume of a fine pore of which a diameter is 4-14 nm measured by nitrogen gas adsorption of the inorganic porous material being equal to or more than 0.4 ml/g; and a total volume of all the fine pores of which each diameter is 1-200 nm measured by nitrogen gas adsorption of the inorganic porous material being equal to or less than 1.6 ml/g.

23. The functional member according to any one of claims 7 to 22, further comprising a coating layer of a dry matter of a resin colloidal dispersion is formed on a surface of the designed layer.

24. The functional member according to any one of claims 1 to 23, further comprising a photocatalyst fixed on an outermost surface layer.

25. The functional member according to any one of claims 1 to 24, wherein the base material is selected from the group consisting of a paper, a synthetic resin sheet, a woven fabric, a non-woven fabric, a glass fiber sheet, a metal fiber, a flame-retardant backing paper, a base material paper for wall papers, a composite and a laminated material thereof.

26. An coating liquid for forming the first layer of the functional member according to claims 1 to 25, comprising an inorganic porous material and an organic emulsion, wherein the organic matter in the organic emulsion has a glass-transition temperature of -5°C to -50°C.

27. The coating liquid according to claim 26, further comprising a non-porous filler.

28. A method of manufacturing a functional member according to any one of claims 1 to 25, comprising the steps of:

   providing a flexible base material,
   applying the coating liquid according to claim 25 or 26 on the base material,
   drying the coating liquid to form a first layer, and
   applying a mixture of an inorganic filler and an organic binder over an approximately entire surface of the first layer to form a second layer,

   wherein the organic binder in the second layer is contained in an amount of 30-300 parts by volume to 100 parts by volume of the inorganic filler.

FIG. 1

MOISTURE ABSORBING/RELEASING RATE [g/m2]

TIME [hr]

- —●— EXAMPLE A1
- —▲— EXAMPLE A2
- —◆— EXAMPLE A3
- ···○··· EXAMPLE A7
- ···△··· COMPERATIVE EXAMPLE A1
- ···◇··· COMPERATIVE EXAMPLE A3
- —✕— COMPERATIVE EXAMPLE A4
- ···✱·· COMPERATIVE EXAMPLE A5

FIG. 2

FIG. 3

FIG. 4

FIG. 5

FIG. 6

FIG. 7

FIG. 8

FIG. 9

FIG. IO

FIG. II

FIG. I2

FIG. I3

FIG. I4

**INTERNATIONAL SEARCH REPORT**

| International application No. |
| --- |
| PCT/JP2004/004246 |

A. CLASSIFICATION OF SUBJECT MATTER
   Int.Cl⁷ B32B27/18

According to International Patent Classification (IPC) or to both national classification and IPC

B. FIELDS SEARCHED

Minimum documentation searched (classification system followed by classification symbols)
   Int.Cl⁷ B32B1/00-35/00

Documentation searched other than minimum documentation to the extent that such documents are included in the fields searched

| | | | |
| --- | --- | --- | --- |
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 11-254632 A (Dainippon Printing Co., Ltd.), 21 September, 1999 (21.09.99), (Family: none) | 1-28 |
| A | JP 2001-9978 A (Dainippon Printing Co., Ltd.), 16 January, 2001 (16.01.01), (Family: none) | 1-28 |
| A | JP 2001-336266 A (Dainippon Printing Co., Ltd.), 07 December, 2001 (07.12.01), (Family: none) | 1-28 |
| P,A | JP 2003-220657 A (Toto Ltd.), 05 August, 2003 (05.08.03), (Family: none) | 1-28 |

☐ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 July, 2004 (01.07.04) | 20 July, 2004 (20.07.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

<div align="center">

**INTERNATIONAL SEARCH REPORT**

</div>

| International application No. |
| --- |
| PCT/JP2004/004246 |

---

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**     **Observations where unity of invention is lacking (Continuation of item 3 of first sheet)**

This International Searching Authority found multiple inventions in this international application, as follows:
  The technical feature of the functional member according to claim 1 is not limited to the matter wherein use is made of the fluid to be applied according to claim 26 and 27.  Therefore, the invention according to claim 1 and the inventions according to claims 26 and 27 do not have a technical feature being common in the meaning of PCT Rule 13.2 the second sentence, and accordingly, the invention according to claim 1 and the inventions according to claims 26 and 27 do not comply with the requirement of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐   The additional search fees were accompanied by the applicant's protest.

                ☐   No protest accompanied the payment of additional search fees.

---

Form PCT/ISA/210 (continuation of first sheet (2)) (January 2004)